# EUROPÄISCHE PATENTANMELDUNG

(11) **EP 4 299 414 A1**
(43) Veröffentlichungstag der Anmeldung: **03.01.2024**
(21) Anmeldenummer: 23176845.8
(22) Anmeldetag: 01.06.2023
(51) Int. Cl.: B62D 1/184, B62D 1/19

(54) **LENKSÄULE FÜR EIN KRAFTFAHRZEUG**

(30) Priorität: 30.06.2022 BE 202205533
(71) Anmelder: thyssenkrupp Presta Aktiengesellschaft, 9492 Eschen (LI); thyssenkrupp AG, 45143 Essen (DE)
(72) Erfinder: Schnitzer, Hieronymus, 9487 Gamprin (LI); Igras, Adam, 9472 Grabs (CH)
(74) Vertreter: thyssenkrupp Intellectual Property GmbH

(57) **Zusammenfassung**

Die vorliegende Erfindung betrifft eine Lenksäule (1) für ein Kraftfahrzeug umfassend eine Stelleinheit (3). Um eine verringerte Reibung und eine flexiblere Anpassung zu ermöglichen, schlägt die Erfindung vor, dass der Anschlagkörper einen Anschlaghebel (61) aufweist, der relativ zur Klemmachse (51) um eine Hebelachse (H) an der Trageinheit (2) drehbar gelagert ist.

## Beschreibung

### Stand der Technik

Die Erfindung betrifft eine Lenksäule für ein Kraftfahrzeug umfassend eine Stelleinheit, in der eine Lenkspindel um ihre in Längsrichtung erstreckte Längsachse drehbar gelagert ist, wobei die Stelleinheit von einer Trageinheit in einer Verstellrichtung relativ dazu verstellbar gehalten ist, und umfassend eine Fixiereinrichtung und eine damit zusammenwirkende Begrenzungseinrichtung, wobei die Fixiereinrichtung durch Drehung einer an der Trageinheit gelagerten Klemmachse wahlweise in eine Fixierstellung bringbar ist, in der die Stelleinheit relativ zur Trageinheit fixiert ist, oder in eine Lösestellung, in der die Stelleinheit relativ zur Trageinheit verstellbar ist, wobei die Klemmachse mit einem Anschlagkörper der Begrenzungseinrichtung derart wirkverbunden ist, dass in der Lösestellung der Anschlagkörper in eine Begrenzungsposition gebracht wird, in der er in Verstellrichtung gegen einen Gegenanschlag der Stelleinheit anschlagbar ist, und dass in der Fixierstellung der Anschlagkörper in eine Durchgangsposition gebracht wird, in der er über den Gegenanschlag hinaus in Verstellrichtung durchgehend verstellbar ist.

Bei einer derartigen verstellbaren Lenksäule kann eine Längsverstellung der Lenkradposition des Lenkrads, das am fahrerseitigen, hinteren Ende der in der Stelleinheit um die Längsachse drehbar gelagerten Lenkspindel angebrachten ist, dadurch realisiert sein, dass die Stelleinheit in der durch die Längsachse gegebenen Verstellrichtung, nämlich der Längsrichtung relativ zu einer am Fahrzeug festgelegten Trageinheit verstellbar ist.

Zur lösbaren Fixierung der Verstellposition ist eine Fixiereinrichtung vorgesehen, die eine an der Trageinheit gelagerte Klemmachse aufweist, die entweder manuell mittels eines Spannhebels oder auch motorisch zur wahlweisen Einstellung einer Lösestellung, auch als Freigabestellung bezeichnet, oder einer Fixierstellung. Im Fahrbetrieb wird die Fixierstellung eingestellt, wobei die Stelleinheit zur Fixierung der Lenkradposition mit der Trageinheit verspannt ist, beispielsweise die durch einen mit der Klemmachse zusammenwirkenden Hub- oder Spannmechanismus zwischen Seitenwangen der Trageinheit festgeklemmt wird. Zur Verstellung wird die Klemmachse in die Lösestellung gedreht, wodurch die Verspannung aufgehoben wird, so dass die Stelleinheit samt Lenkrad relativ zur Trageinheit verstellt werden kann.

Der zur Verstellung maximal mögliche Verstellweg wird durch eine Begrenzungseinrichtung begrenzt, so dass die Stelleinheit bei der Längsverstellung insbesondere nicht über einen vorgegebenen vorderen Anschlag hinaus in die Trageinheit eingeschoben werden kann, wenn sich die Fixiereinrichtung in Lösestellung befindet. Bei einem Crashfall, wenn ein Körper auf das Lenkrad aufprallt, wird Haltekraft der in Fixierstellung festgelegten Fixiereinrichtung durch die hohe eingebrachte kinetische Energie überwunden, und die Stelleinheit wird relativ zur Trageinheit in Fahrtrichtung nach vorn verschoben. Dabei kann zwischen Stelleinheit und Trageinheit eine Energieabsorptionseinrichtung vorgesehen sein, um eine möglichst gleichmäßige Abbremsung zu erzeugen.

Um in dem besagten Crashfall eine möglichst gleichmäßige Energieabsorption und damit eine Abbremsung in Verstellrichtung über einen möglichst langen Crashweg zu realisieren, ist es bekannt, eine sogenannte aktive Begrenzungseinrichtung vorzusehen, in Längsrichtung entspricht dies einem aktiven Längsanschlag, wie beispielsweise in der DE 10 2014 016 510 A1 beschrieben. Dabei ist der Anschlagkörper mit der Klemmachse geloppelt, dass er in der Löseposition eine Begrenzungsposition einnimmt, in der er durch Kollision mit einem korrespondierenden Gegenanschlag den möglichen Verstellweg begrenzt. Beim Einstellen der Fixierposition wird der Anschlagkörper in eine Durchgangsposition gebracht, in der er in Verstellrichtung frei an dem Gegenschlag vorbeibewegt werden kann. Dadurch, dass die Begrenzungseinrichtung in Fixierposition deaktiviert ist, kann die Stelleinheit im Crashfall über den regulär zur Einstellung der Lenkradposition vorgesehenen Verstellweg hinaus auf einem längeren Crashweg relativ zur Trageinheit verschoben werden, so dass eine vorteilhaft verlängerte und gleichmäßigere Energieabsortion ermöglicht wird.

Bei der vorbekannten Begrenzungseinrichtung ist das Anschlagelement direkt auf der Klemmachse angebracht, so dass es bei der Betätigung zusammen mit dieser mitgedreht wird. Zusätzlich wirkt es quer zur Klemmachse verlagerbar über eine exzentrische Nockenkontur mit der Klemmachse zusammen. Dadurch lassen sich mit Vorteil komplexe Bewegungsbahnen des Anschlagelements realisieren, es kann jedoch erhöhte Reibung auftreten. Außerdem ist die konstruktive Freiheit bei der Ausgestaltung der Begrenzungseinrichtung eingeschränkt.

Angesichts der vorangehend erläuterten Problematik ist es eine Aufgabe der vorliegenden Erfindung, eine verringerte Reibung und eine flexiblere Anpassung zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug umfassend eine Stelleinheit, in der eine Lenkspindel um ihre in Längsrichtung erstreckte Längsachse drehbar gelagert ist, wobei die Stelleinheit von einer Trageinheit in einer Verstellrichtung (z. B. Längsrichtung) relativ dazu verstellbar gehalten ist, und umfassend eine Fixiereinrichtung und eine damit zusammenwirkende Begrenzungseinrichtung, wobei die Fixiereinrichtung durch Drehung einer an der Trageinheit gelagerten Klemmachse wahlweise in eine Fixierstellung bringbar ist, in der die Stelleinheit relativ zur Trageinheit fixiert ist, oder in eine Lösestellung, in der die Stelleinheit relativ zur Trageinheit verstellbar ist, wobei die Klemmachse mit einem Anschlagkörper der Begrenzungseinrichtung derart wirkverbunden ist, dass in der Lösestellung der Anschlagkörper in eine Begrenzungsposition gebracht wird, in der er in Verstellrichtung gegen einen Gegenanschlag der Stelleinheit anschlagbar ist, und dass in der Fixierstellung der Anschlagkörper in eine Durchgangsposition gebracht wird, in der er über den Gegenanschlag hinaus in Verstellrichtung durchgehend verstellbar ist, ist erfindungsgemäß vorgesehen, dass der Anschlagkörper einen Anschlaghebel aufweist, der relativ zur Klemmachse um eine Hebelachse an der Trageinheit drehbar gelagert ist.

Gemäß der Erfindung ist der Anschlagkörper um eine separat von der Klemmachse angeordnete Hebelachse an der Trageinheit drehbar gelagert ist. Die Hebelachse ist nicht mit der Klemmachse identisch, ist anders ausgedrückt nicht mit dieser zusammenfallend angeordnet oder ausgebildet. Dabei ist die Tragachse definiert, zumindest in Längsrichtung ortsfest an der Trageinheit relativ zur Stelleinheit positioniert. Im Gegensatz zum eingangs genannten Stand der Technik ist der Anschlagkörper nicht direkt auf der Klemmachse angeordnet, und dabei auch nicht relativ zur Klemmachse verlagerbar.

Bei der Erfindung ist der als Anschlaghebel ausgebildete Anschlagkörper um die Hebelachse zwischen der Begrenzungsposition und der Durchgangsposition verschwenkbar. Die Hebelachse ist eindeutig räumlich definiert und separat von der Klemmachse angeordnet. Der Anschlaghebel ist erfindungsgemäß derart mit der Klemmachse gekoppelt, so dass eine Drehung der Klemmachse in eine Drehung des Anschlaghebels um die nicht mit der Klemmachse identische Hebelachse umgesetzt wird. Durch Drehen der Klemmachse aus der Lösestellung in die Fixierstellung wird der Anschlaghebel in die Begrenzungsposition verschwenkt, und umgekehrt durch Drehen der Klemmachse aus der Lösestellung in die Fixierstellung in seine Durchgangsposition. Dabei ist es vorteilhaft, dass die Drehlagerung des Anschlaghebels konstruktiv einfach im Hinblick auf eine geringe Reibung ausgelegt werden kann, so dass eine vorteilhaft geringe Betätigungskraft zur Drehung der Klemmachse realisiert werden kann. Die Betriebssicherheit wird durch die geringere Haft- und Gleitreibung ebenfalls in vorteilhafter Weise erhöht.

Im Unterschied zu dem eingangs genannten Stand der Technik ist der Anschlagkörper nicht bewegbar auf der Klemmachse angeordnet, wodurch als Vorteile eine geringere Reibung und eine besser definierte Bewegung des Anschlaghebels realisierbar sind.

Ein weiterer Vorteil ist, dass durch den Anschlaghebel und die separate, definierte Anordnung der Hebelachse eine größere konstruktive Freiheit bezüglich der Ausgestaltung der Begrenzungseinrichtung ermöglicht wird, beispielsweise im Hinblick auf die Anordnung des Gegenanschlags und dergleichen.

Wie im Stand der Technik ist in der Lösestellung der mögliche Verstellweg durch den Anschlag des Anschlagkörpers am Gegenanschlag begrenzt, während in der Fixierstellung die Begrenzungseinrichtung deaktiviert ist, und der Anschlagkörper in der Verstellrichtung am Gegenanschlag frei vorbeibewegt werden kann. Der Anschlaghebel weist in einem schwenkbar beweglichen Bereich eine Anschlagfläche auf, die in der Begrenzungsposition in Verstellrichtung eine korrespondierende Gegenanschlagfläche des Gegenanschlags kontaktieren kann.

Vorzugsweise ist vorgesehen, dass die Hebelachse parallel zur Klemmachse ist. Wie die Klemmachse kann die Hebelachse quer, im Wesentlichen senkrecht zur Verstellrichtung angeordnet sein, bei einer Längsverstellung quer zur Längsachse. Die parallele Anordnung ermöglich einen konstruktiv einfachen, funktionssicheren und kompakten Aufbau.

Es kann vorteilhaft sein, dass die Hebelachse Abstand zur Klemmachse hat. Der Abstand kann bevorzugt einen definiert und gleichbleibend sein. Durch die Möglichkeit, den Anstand frei vorzugeben, wird eine größere konstruktive Freiheit ermöglicht, beispielsweise hinsichtlich der Anordnung des Gegenanschlags an der Stelleinheit.

Eine vorteilhafte Ausführung ist, dass die Klemmachse und der Anschlaghebel derart gekoppelt sind, dass bei einer Drehung der Klemmachse der Anschlaghebel mit entgegengesetztem Drehsinn um die Hebelachse rotiert wird. Die Umsetzung der Drehrichtung der Klemmachse in eine Gegendrehung des Anschlaghebels um die Hebelachse mit umgekehrtem Drehsinn ist funktional und konstruktiv besonders vorteilhaft. Bein Fixieren kann beispielsweise ein an der Trageinheit abgestütztes Spann-, Sperr- oder Halteelement durch Drehung der Klemmachse quer zur Verstellrichtung, bevorzugt quer zur Längsachse, gegen die Stelleinheit bewegt werden, um einen Fixiereingriff zu erzeugen. Damit synchronisiert muss die Begrenzungseinrichtung dadurch deaktiviert werden, dass der Anschlagkörper aus seiner Begrenzungsposition in die Durchgangsposition bewegt wird. Hierzu kann beispielsweise eine Anschlagfläche des Anschlaghebels von der Längsachse gesehen aus dem Anschlagquerschnitt des Gegenanschlags nach außen weg bewegt werden. Die Bewegungsrichtung des Anschlagelements ist dabei entgegengesetzt zum genannten Spann-, Sperr- oder Halteelement, was in vorteilhafter Weise durch die entgegengesetzten Drehrichtungen von Klemmachse und Hebelachse konstruktiv einfach und kompakt realisiert werden kann.

Es kann vorteilhaft sein, dass an der Klemmachse ein exzentrisch abstehendes Betätigungselement angebracht ist, welches in eine exzentrisch bezüglich der Hebelachse angeordnete Betätigungsaufnahme eingreift. Das bevorzugt radial von der Klemmachse von der Klemmachse abstehende Betätigungselement kann in einem radial von der Klemmachse beabstandeten Endbereich an dem Anschlaghebel angelenkt sein. Das Betätigungselement kann beispielsweise einen von der Klemmachse abstehenden Betätigungsvorsprung mit einer von der Klemmachse radial beabstandetes Koppel- oder Eingriffselement aufweisen, beispielsweise einen axial bezüglich der Klemmachse vorstehenden Zapfen, Nocken oder dergleichen. Dieses kann gelenkig in eine korrespondierende Betätigungsaufnahme an dem Anschlaghebel eingreifen, beispielsweise eine radial von der Hebelachse beabstandete Öffnung, beispielsweise eine Koppel- oder Eingriffsöffnung. Dadurch kann eine Drehung der Klemmachse mit einer Drehung des Anschlaghebels zwangsgekoppelt sein. Vorteilhaft ist, dass mit geringem Aufwand unterschiedliche Drehrichtungen der Klemmachse und des Anschlaghebels und die Hebelachse wie in der vorangehend beschriebenen Ausführung realisiert werden können. Auf diese Weise kann der Anschlaghebel aus der Durchgangsposition in die Begrenzungsposition verschwenkt werden, wenn die Klemmachse aus der Fixierstellung in die Lösestellung gedreht wird, und umgekehrt.

Bevorzugt kann dabei zwischen Betätigungselement und Betätigungsaufnahme ein loser Formschluss gebildet werden. Beispielsweise kann die Koppel- oder Eingriffsöffnung radial schlitzförmig sein, und das Koppel- oder Eingriffselement spielhaltig aufnehmen. Dadurch kann eine leichtgängige, formschlüssige Zwangskopplung der Drehungen von Anschlaghebel und Klemmachse realisiert werden.

Es ist vorteilhaft, dass das Betätigungselement und/oder die Betätigungsaufnahme reibungsmindernd ausgestaltet sind. Im Vergleich zu den Gleitführungen im Stand der Technik können die Drehlagerungen bei der Erfindung mit geringem konstruktiven Aufwand leichtgängiger ausgestaltet werden. Effektive Maßnahmen können beispielsweise ein Einsatz reibungsarmer Materialpaarungen sein, wie beispielsweise Metall-Kunststoff-Lagerpaarungen, die Aufbringung von Kunststoff- oder Hartstoff-Beschichtungen auf die Lagerflächen oder dergleichen.

Es kann mit Vorteil vorgesehen sein, dass der Anschlaghebel als zweiarmiger Hebel ausgebildet ist, der einen Betätigungsarm und einen Anschlagarm aufweist. Ein an der Klemmachse angeordnetes Betätigungselement, beispielsweise ein vorangehend beschriebener Betätigungsvorsprung, ist an dem Betätigungsarm angelenkt, und der Anschlagarm weist in einem von der Hebelachse beabstandeten Endbereich eine Anschlagfläche auf, die gegen den Gegenanschlag anschlagbar ist. Es kann eine einfache und robuste realisiert werden. Es ist weiterhin vorteilhaft, dass durch die frei vorgebbare Länge und Form des Betätigungsarms und des Anschlagarms unterschiedliche, optimierte Kraft-Weg-Übersetzungen relativ zur Bewegung der Klemmachse realisiert werden können, und mit geringem Aufwand eine Anpassung an die räumlichen Gegebenheiten der Lenksäule erfolgen kann.

Bevorzugt kann vorgesehen sein, dass der Anschlaghebel einen Kunststoff aufweist. Dadurch, dass der Anschlaghebel ganz oder teilweise aus einem Kunststoff ausgebildet ist, können kostensparend eine leichte Bauweise und vorteilhafte funktionale Eigenschaften realisiert sein, beispielsweise eine geräuschmindernde Ausgestaltung der Anschlagfächen, eine reibungsarme Lagerung oder Anlenkung, und dergleichen.

Es kann vorgesehen sein, dass ein Arretierelement mit der Klemmachse wirkverbunden ist, welches in Fixierstellung in Eingriff bringbar ist mit einem an der Stelleinheit angebrachten Eingriffselement. Das Arretierelement kann beispielsweise ein Formschlusselement aufweisen, beispielsweise einen Sperrhaken, einen Zahnstein oder dergleichen, der in der Fixierstellung in ein korrespondierendes Gegenformschlusselement an der Stelleinheit eingreift, zur Bildung eines in Verstellrichtung wirksamen Formschlusses. Dabei ist das Arretierelement derart mit der Klemmachse wirkverbunden, das es bei einer Drehung der Klemmachse aus der Fixierstellung in die Lösestellung aus dem Eingriff mit dem Eingriffselement gelöst wird. Dann ist die Stelleinheit bis zum Anschlag des Anschlaghebels am Gegenanschlag innerhalb des Verstellbereichs relativ zur Trageinheit verstellbar. Umgekehrt wird bei einer Drehung der Klemmachse aus der Lösestellung in die Fixierstellung das Arretierelement in Eingriff mit dem Eingriffselement gebracht. Dann ist die Stelleinheit relativ zur Trageinheit fixiert. Dadurch kann eine sichere Fixierung der Stelleinheit gewährleistet werden.

Es kann vorteilhaft sein, dass zwischen der Klemmachse und der Stelleinheit eine Energieabsorptionseinrichtung eingegliedert ist. Eine Energieabsorptionseinrichtung kann in an sich bekannter Weise ein Energieabsorptionselement aufweisen, welches in Verstellrichtung mit einem Ende über die Klemmachse an der Trageinheit abgestützt ist, und mit dem anderen Ende an der Stelleinheit. Wird in einem sogenannten Crashfall durch einen auf das Lenkrad auftreffenden Körper eine hohe Crashkraft über das Lenkrad auf die Stelleinheit ausgeübt, die einen vorgegebenen Grenzwert überschreitet, wird die Stelleinheit unter Überwindung der Fixierkraft in der Fixierstellung der Fixiereinrichtung in Verstellrichtung, bevorzugt in Längsrichtung, relativ zur Trageinheit verschoben. Dabei wird mindestens ein Energieabsorptionselement der Energieabsorptionseinrichtung plastisch verformt, wodurch die eingeleitete kinetische Energie in Verformungsarbeit und Wärme umgesetzt und somit absorbiert wird, so dass der auf das Lenkrad auftreffende Körper kontrolliert abgebremst wird und die Verletzungsgefahr verringert wird. Das Energieabsorptionselement kann durch plastische Verformung und/oder Reibung kinetische Energie absorbieren, und kann in an sich bekannter Weise ein Biege- und/oder Reißelement, ein Zerspanungs- oder Deformationselement, ein Reibelement und/oder dergleichen umfassen.

Eine Energieabsorptionseinrichtung kann bevorzugt wirkungsmäßig zwischen einem Eingriffselement und der Stelleinheit angeordnet sein, und zusätzlich oder alternativ zwischen dem Arretierelement und der Trageinheit. Somit wird die Energieabsorptionseinrichtung eingekoppelt und aktiviert, wenn die Fixiereinrichtung in Fixierstellung ist, und in Lösestellung zum Verstellen ausgekoppelt und deaktiviert.

Es ist bevorzugt, dass die Stelleinheit in einer Manteleinheit in Längsrichtung verstellbar ist. Die Stelleinheit kann beispielsweise einen Innenmantel aufweisen, in dem die Lenkspindel gelagert ist, und der in Längsrichtung teleskopierbar in einem Außenmantel der Manteleinheit aufgenommen ist. Gemäß der Erfindung können die Klemmachse und der Anschlaghebel um die Hebelachse an dem Außenmantel gelagert sein, und der Gegenanschlag an dem Innenmantel.

Es kann weiter vorgesehen sein, dass die Stelleinheit von der Trageinheit höhenverstellbar gehalten ist. Dazu kann beispielsweise die Fixiereinrichtung ausgestaltet sein, um die Stelleinheit oder eine diese aufnehmende Manteleinheit in Fixierstellung in einer Höhenrichtung quer zur Längsrichtung relativ zur Trageinheit lösbar zu fixieren, und in der Lösestellung eine Höhenverstellung zu ermöglichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine weitere schematische perspektivische Ansicht der Lenksäule gemäß Figur 1,
- Figur 3: eine weitere schematische perspektivische Ansicht der Lenksäule gemäß Figuren 1 und 2,
- Figur 4: eine vergrößerte Detailansicht der Lenksäule gemäß Figur 1,
- Figur 5: eine ausschnittweise Seitenansicht einer erfindungsgemäßen Begrenzungseinrichtung in der Lösestellung,
- Figur 6: eine ausschnittweise Seitenansicht einer erfindungsgemäßen Begrenzungseinrichtung in der Durchgangsstellung,
- Figur 7: eine ausschnittweise Seitenansicht einer erfindungsgemäßen Begrenzungseinrichtung nach einer zweiten Ausführungsform in einer Lösestellung,
- Figur 8: eine ausschnittweise Seitenansicht einer erfindungsgemäßen Begrenzungseinrichtung nach einer zweiten Ausführungsform in einer Lösestellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

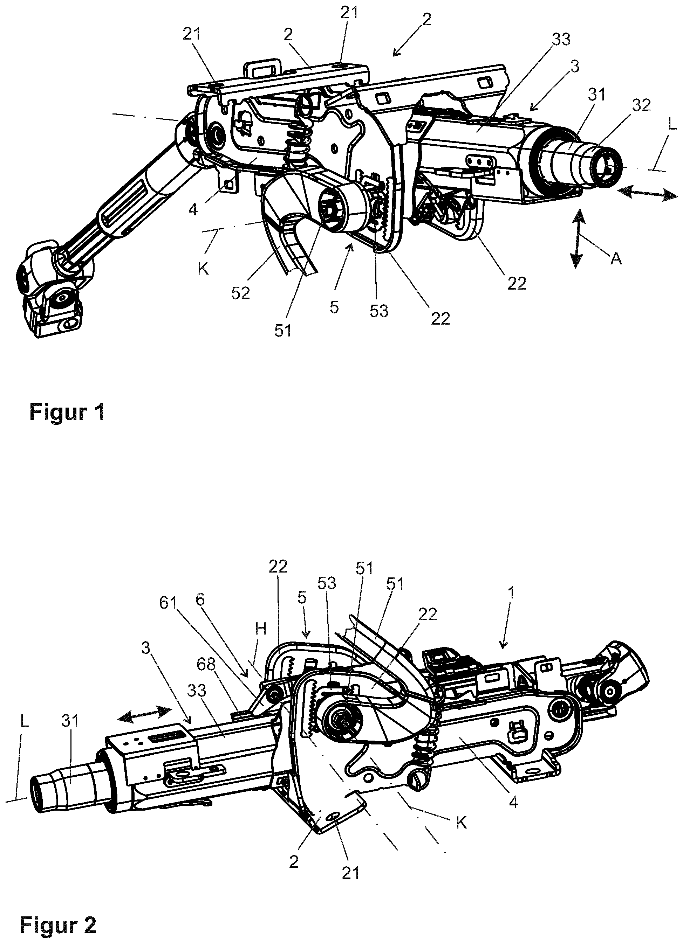

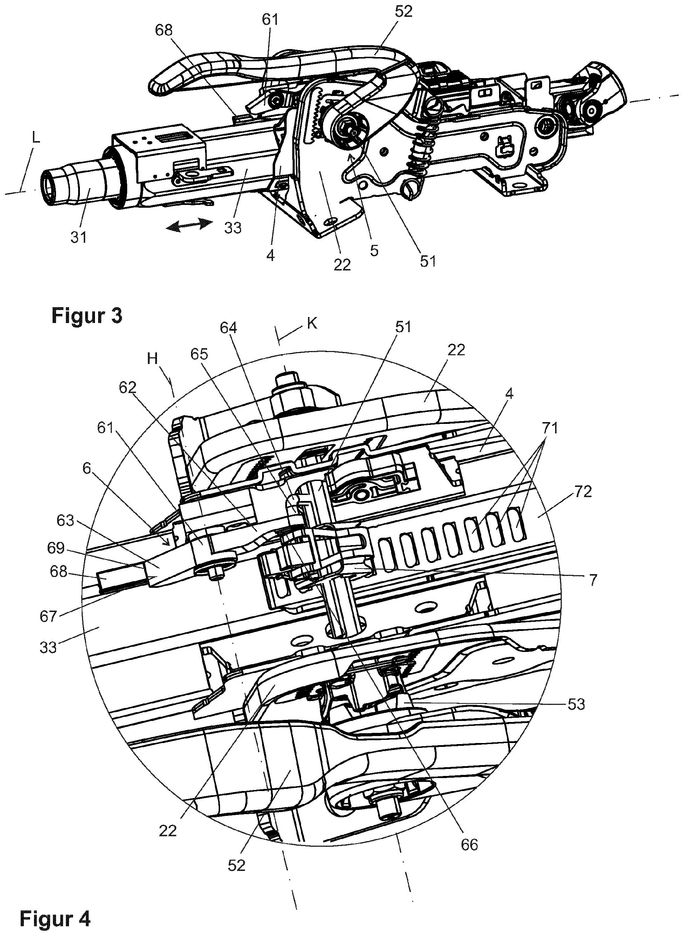

Figuren 1, 2 und 3 zeigen schematische perspektivische Gesamtansichen einer erfindungsgemäßen Lenksäule 1, und Figur 4 eine vergrößerte Detailansicht.

Die Lenksäule 1 weist eine Trageinheit 2 mit Befestigungsbohrungen 21 zur Anbringung an einer nicht dargestellten Fahrzeugkarosserie.

Eine Stelleinheit 3 umfasst eine Lenkspindel 31, die an ihrem bezüglich der Fahrtrichtung hinteren, der Fahrerposition zugewandten Ende einen Befestigungsabschnitt 32 zur Anbringung eines nicht dargestellten Lenkrads aufweist. Die Lenkspindel 31 um eine in Längsrichtung erstreckte Längsachse L in einem Innenmantel 33 drehbar gelagert.

Die Stelleinheit 3 ist in Längsrichtung verstellbar in einem Außenmantel 4 einer Manteleinheit aufgenommen, wobei der Innenmantel 33 in dem Außenmantel 4 teleskopierbar ist.

Der Außenmantel 4 ist zwischen zwei - in der in Figur 1 gezeigten Einbaulage - nach unten gerichteten Seitenwangen 22 fixierbar gehalten.

Eine Fixiereinrichtung 5 weist eine Klemmachse 51 auf, welche die beiden Seitenwangen 22 und den Außenmantel 4 in einer Klemmrichtung K quer zur Längsachse L durchsetzt. An der Klemmachse 51 ist ein Betätigungshebel 52 fixiert, der eine manuelle Drehung der Klemmachse 51 ermöglicht. Mit der Klemmachse 51 wirkt ein außen an den Seitenwangen abgestützter Hubmechanismus 53 zusammen, der in an sich bekannter Weise Keilscheiben, Kippstifte oder dergleichen aufweisen kann, und ausgebildet ist, um bei einer manuellen Drehung des Betätigungshebels 52 in die Fixierstellung die Seitenwangen 22 gegen den Außenmantel 4 zu klemmen, wobei gleichzeitig der Innenmantel 33 und damit die Stelleinheit 3 in dem Außenmantel 4 und damit relativ zur Trageinheit 2 verspannt und in Längsrichtung fixiert wird.

Figur 2 zeigt die Fixiereinrichtung 5 in Lösestellung, und Figur 3 in derselben Ansicht in Fixierstellung.

Wird die Klemmachse 51 mittels des Betätigungshebels 52 in die entgegengesetzte Richtung gedreht, wird die Fixiereinrichtung 5 in die Lösestellung gebracht, wobei die Klemmkraft aufgehoben wird, und die Stelleinheit 3 relativ zum Außenmantel 4 und damit relativ zur Trageinheit 2 in Längsrichtung verstellt werden kann, wie mit dem Doppelpfeil angedeutet ist.

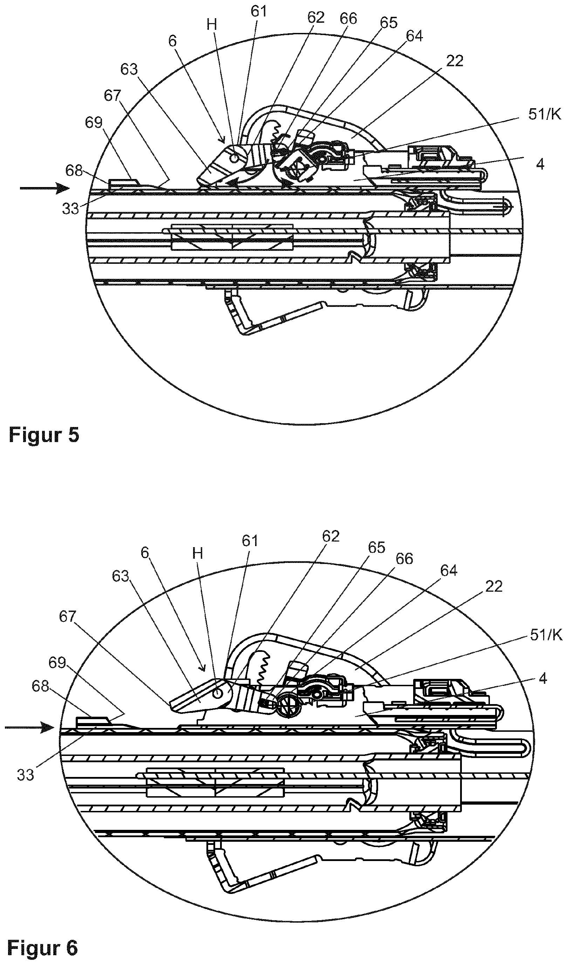

Eine erfindungsgemäße Begrenzungseinrichtung 6 weist einen Anschlaghebel 61 auf, der als zweiarmiger Hebel ausgebildet ist und am Außenmantel 4 um eine Hebelachse H drehbar gelagert ist. Figur 4 zeigt eine perspektivische, vergrößerte Detailansicht von unten, und Figuren 5 und 6 eine schematische Seitenansicht in Richtung der Hebelachse H bzw. der Klemmrichtung K, wobei Figur 5 die Begrenzungsposition der Begrenzungseinrichtung 6 zeigt, die eingenommen wird, wenn sich die Fixiereinrichtung 5 in der Lösestellung gemäß Figur 3 befindet, und Figur 6 die Durchgangsposition, die eingenommen wird, wenn sich die Fixiereinrichtung 5 in der Lösestellung gemäß Figur 4 befindet.

Die Hebelachse H ist parallel zur Klemmachse 51, d.h. zur Klemmrichtung K.

Der zweiarmige Anschlaghebel 61 weist einen Betätigungsarm 62 und einen Anschlagarm 63 auf. Ein von der Klemmachse 51 radial abstehender Betätigungsvorsprung 64 ist gelenkig in einem äußeren Abschnitt des Betätigungsarms angelenkt, beispielsweise mittels eines parallel zur Hebelachse H vorstehenden Zapfens 65, der in ein Langloch 66 eingreift.

Der Anschlagarm 63 weist an seinem radial abstehenden Ende eine Anschlagfläche 67 auf, die in Längsrichtung nach vorn gerichtet ist.

An dem Innenmantel 33 ist ein nach außen vorspringender Gegenanschlag 68 mit einer Gegenanschlagfläche 69 angeordnet, die in Längsrichtung nach hinten gerichtet ist.

Figur 5 zeigt die Lösestellung der Fixiereinrichtung 5. Die Anschlagfläche 67 schlägt am Ende des möglichen Verstellbereichs des Innenmantel 33 relativ zum Außenmantel 4 in Längsrichtung gegen die korrespondierende Gegenanschlagfläche 69 am Gegenanschlag 68 an. Eine weitere relative Bewegung in Längsrichtung und damit der Verstellbereich zur Einstellung der Lenkradposition ist dadurch begrenzt, wie mit dem durchgestrichenen Pfeil angedeutet ist.

Wird die Klemmachse 51 aus der Lösestellung in Richtung der Fixierstellung gedreht, wie in Figur 5 mit dem gebogenen Pfeil angedeutet, nimmt der Betätigungsvorsprung 64 über den Zapfen 65 und das Langloch 66 den Betätigungsarm 62 mit, so dass der Anschlaghebel 61 um die Hebelachse H in die entgegengesetzte Drehrichtung gedreht wird, wie ebenfalls mit einem gebogenen Pfeil angedeutet ist.

Wenn die Fixierstellung, wie in Figur 6 gezeigt, erreicht ist, liegt die Anschlagfläche 67 am Anschlaghebel 63 außerhalb des Begrenzungsquerschnitts des Gegenanschlags 68, und kann an der Gegenanschlagfläche 69 in Längsrichtung vorbei bewegt werden, wie mit dem Pfeil angedeutet ist. Diese Relativbewegung zwischen Innenmantel 33 und Außenmantel 4 über den Verstellbereich hinaus kann allerding nur im Crashfall erfolgen, wenn die in Längsrichtung auf die Lenkspindel 31 einwirkende Crashkraft hoch genug ist, um die Klemmwirkung der Fixiereinrichtung 5 zu überwinden.

In Figur 4 ist eine vorteilhafte Weiterbildung dargestellt, bei der ein Arretierelement in Form eines Sperrhakens 7 drehfest an der Klemmachse 51 angebracht ist. In der Fixierstellung der Fixiereinrichtung 5 kann dieser in korrespondierende Formschlusselemente 71 einer an dem Innenmantel 33 angebrachten Eingriffselement 72 formschlüssig eingreifen. Zwischen dem Eingriffselement 72 und dem Innenmantel 33 kann in an sich bekannter Weise eine Energieabsorptionseinrichtung angeordnet sein, die ein oder mehrere Energieabsorptionselemente aufweisen kann, die nur im Crashfall bei einer Relativbewegung des Eingriffselements 72 relativ zum Innenmantel 33 unter Energieabsorption plastisch deformiert werden können. In der Lösestellung wird der Sperrhaken 7 von dem Eingriffselement 72 gelöst, so dass der Innenmantel 33 verstellt werden kann ohne die Energieabsorptionseinrichtung zu beanspruchen.

Die Klemmachse 51 kann in den Seitenwangen 22 durch vertikal verlaufende Langlöcher hindurchgeführt sein, so dass eine Höhenverstellung des Außenmantels 4 samt Stelleinheit 3 und Fixiereinrichtung 5 in der Höhenrichtung A erfolgen kann, wie in Figur 1 angedeutet ist.

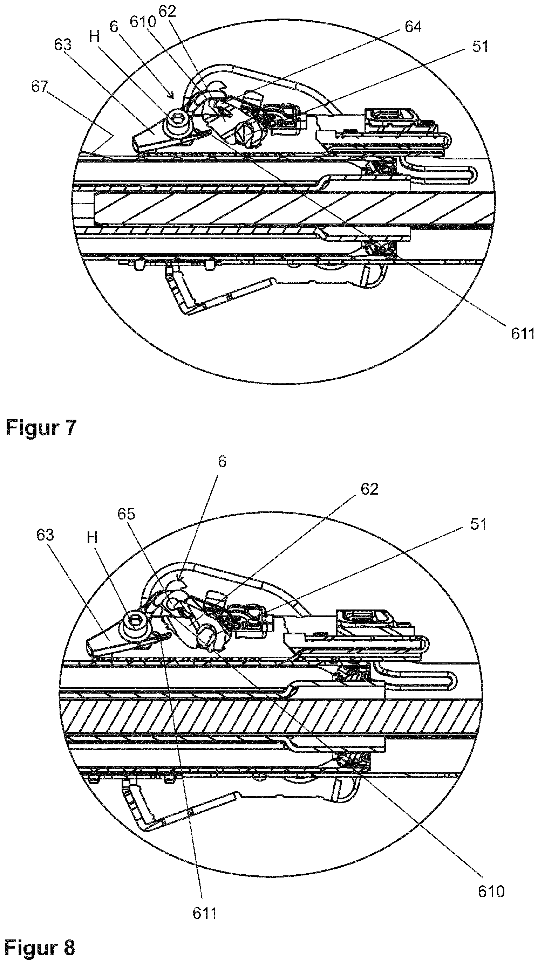

In Figuren 7 und 8 ist eine zweite Ausführungsform einer erfindungsgemässen Begrenzungseinrichtung 6 gezeigt. Die beiden Figuren zeigen den selben Aufbau in derselben Stellung, wobei in Figur 7 zur besseren Übersicht der Zapfen 65 nicht dargestellt wird. Dabei ist der Anschlagarm 63 in einer Position gezeigt, in der dieser mit der Anschlagfläche 67 wechselwirken kann. In diesem Ausführungsbeispiel ist die Hebelachse H geneigt zur Klemmachse 51 orientiert, diese beiden Achsen sind also nicht parallel. Dabei weist der Anschlagarm 63 eine Betätigungsfläche 610 auf, welche dazu ausgebildet ist, mit einem Zapfen 65, wie in Figur 8 zu sehen ist, in Kontakt gebracht zu werden, um eine Bewegung des Betätigungsarmes 62 auf den Anschlagarm 63 zu übertragen. Das Rückstellen des Anschlagarms 63 erfolgt dabei über eine Gegenbetätigungsfläche 611, welche mit dem Zapfen 65 zusammenwirken kann.

### Bezugszeichenliste

- 1: Lenksäule
- 2: Trageinheit
- 21: Befestigungsbohrung
- 22: Seitenwangen
- 3: Stelleinheit
- 31: Lenkspindel
- 32: Befestigungsabschnitt
- 33: Innenmantel
- 4: Außenmantel
- 5: Fixiereinrichtung
- 51: Klemmachse
- 52: Betätigungshebel
- 53: Hubmechanismus
- 6: Begrenzungseinrichtung
- 61: Anschlaghebel
- 62: Betätigungsarm
- 63: Anschlagarm
- 64: Betätigungsvorsprung
- 65: Zapfen
- 66: Langloch
- 67: Anschlagfläche
- 68: Gegenanschlag
- 69: Gegenanschlagfläche
- 610: Betätigungsfläche
- 611: Gegenbetätigungsfläche
- 7: Sperrhaken
- 71: Formschlusselemente
- 72: Eingriffselement
- L: Längsachse
- K: Klemmrichtung
- H: Hebelachse
- A: Höhenrichtung

## Patentansprüche

1. Lenksäule (1) für ein Kraftfahrzeug umfassend eine Stelleinheit (3), in der eine Lenkspindel (31) um ihre in Längsrichtung erstreckte Längsachse (L) drehbar gelagert ist, wobei die Stelleinheit (3) von einer Trageinheit (2) in einer Verstellrichtung relativ dazu verstellbar gehalten ist, und
umfassend eine Fixiereinrichtung (5) und eine damit zusammenwirkende Begrenzungseinrichtung (6),
wobei die Fixiereinrichtung (5) durch Drehung einer an der Trageinheit (2) gelagerten Klemmachse (51) wahlweise in eine Fixierstellung bringbar ist, in der die Stelleinheit (3) relativ zur Trageinheit (2) fixiert ist, oder in eine Lösestellung, in der die Stelleinheit (3) relativ zur Trageinheit (2) verstellbar ist, wobei die Klemmachse (51) mit einem Anschlagkörper (61) der Begrenzungseinrichtung (6) derart wirkverbunden ist, dass in der Lösestellung der Anschlagkörper (61) in eine Begrenzungsposition gebracht wird, in der er in Verstellrichtung gegen einen Gegenanschlag (68) der Stelleinheit (3) anschlagbar ist, und dass in der Fixierstellung der Anschlagkörper (61) in eine Durchgangsposition gebracht wird, in der er über den Gegenanschlag (68) hinaus in Verstellrichtung durchgehend verstellbar ist,
**dadurch gekennzeichnet,**
**dass** der Anschlagkörper einen Anschlaghebel (61) aufweist, der relativ zur Klemmachse (51) um eine Hebelachse (H) an der Trageinheit (2) drehbar gelagert ist.

2. Lenksäule nach Anspruch 1, **dadurch gekennzeichnet, dass** die Hebelachse (H) parallel zur Klemmachse (51) ist.

3. Lenksäule nach einem der vorangehenden Ansprüche, **dadurch gekennzeichnet, dass** die Hebelachse (H) Abstand zur Klemmachse (51) hat.

4. Lenksäule nach einem der vorangehenden Ansprüche, **dadurch gekennzeichnet, dass** die Klemmachse (51) und der Anschlaghebel (61) derart gekoppelt sind, dass bei einer Drehung der Klemmachse (51) der Anschlaghebel (61) mit entgegengesetztem Drehsinn um die Hebelachse (H) rotiert wird.

5. Lenksäule nach einem der vorangehenden Ansprüche, **dadurch gekennzeichnet, dass** an der Klemmachse (51) ein exzentrisch abstehendes Betätigungselement (64) angebracht ist, welches in eine exzentrisch bezüglich der Hebelachse (H) angeordnete Betätigungsaufnahme (66) eingreift.

6. Lenksäule nach einem der vorangehenden Ansprüche, **dadurch gekennzeichnet, dass** das Betätigungselement (64) und/oder die Betätigungsaufnahme (66) und/oder der Anschlaghebel (61) reibungsmindernd ausgestaltet sind.

7. Lenksäule nach einem der vorangehenden Ansprüche, **dadurch gekennzeichnet, dass** der Anschlaghebel (61) als zweiarmiger Hebel ausgebildet ist, der einen Betätigungsarm (62) und einen Anschlagarm (63) aufweist.

8. Lenksäule nach einem der vorangehenden Ansprüche, **dadurch gekennzeichnet, dass** der Anschlaghebel (61) einen Kunststoff aufweist.

9. Lenksäule nach einem der vorangehenden Ansprüche, **dadurch gekennzeichnet, dass** ein Arretierelement (7) mit der Klemmachse (51) wirkverbunden ist, welches in Fixierstellung in Eingriff bringbar ist mit einem an der Stelleinheit (3) angebrachten Eingriffselement (72).

10. Lenksäule nach einem der vorangehenden Ansprüche, **dadurch gekennzeichnet, dass** zwischen der Klemmachse (51) und der Stelleinheit (3) eine Energieabsorptionseinrichtung eingegliedert ist.

11. Lenksäule nach einem der vorangehenden Ansprüche, **dadurch gekennzeichnet, dass** die Stelleinheit (3) in einer Manteleinheit (4) in Längsrichtung verstellbar ist.
